(19) Europäisches Patentamt
European Patent Office
Office européen des brevets

(11) **EP 2 532 074 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(21) Anmeldenummer: 10798826.3

(22) Anmeldetag: **30.12.2010**

(51) Int Cl.:
**H02K 1/16** *(2006.01)*    **H02K 3/28** *(2006.01)*

(86) Internationale Anmeldenummer:
**PCT/EP2010/070929**

(87) Internationale Veröffentlichungsnummer:
**WO 2011/095266 (11.08.2011 Gazette 2011/32)**

(54) **STÄNDER EINER PERMANENTERREGTEN ROTIERENDEN ELEKTRISCHEN MASCHINE**

STATOR OF A PERMANENTLY EXCITED ROTATING ELECTRIC MACHINE

STATOR POUR UNE MACHINE ÉLECTRIQUE TOURNANTE À AIMANTS PERMANENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2010 DE 102010001619**

(43) Veröffentlichungstag der Anmeldung:
**12.12.2012 Patentblatt 2012/50**

(73) Patentinhaber: **Siemens Aktiengesellschaft 80333 München (DE)**

(72) Erfinder: **MÖHLE, Axel 12163 Berlin (DE)**

(56) Entgegenhaltungen:
**DE-A1- 10 124 415      DE-A1-102006 002 900 DE-A1-102008 032 314**

**Beschreibung**

Die Erfindung betrifft einen Ständer einer permanenterregten rotierenden elektrischen Maschine.

Bei einer permanenterregten rotierenden elektrischen Maschine, wie z.B. einem permanenterregten Generator oder einem permanenterregten Elektromotor, sind insbesondere die Rastmomente im Stillstand der elektrischen Maschine eine kritische Designgröße. Die Amplitude der Rastmomente muss dabei möglichst minimal sein. Darüber hinaus sind auch die Pendelmomente, die unter Last auftreten, möglichst gering zu halten.

Insbesondere bei direkt angetriebenen, permanenterregten Windkraftgeneratoren sind die Rastmomente, die im Stillstand auftreten, sowie die Pendelmomente, die im Betrieb des Windkraftgenerators auftreten, möglichst gering zu halten.

Zur Minimierung der Pendelmomente werden heute im Wesentlichen folgende Verfahren angewendet:

- Schrägung der im Rotor der elektrischen Maschine angeordneten Permanentmagnete,
- Schrägung der elektrischen Leiter im Ständer der elektrischen Maschine,
- Versetzen der Permanentmagnete des Rotors aus der Polmitte.

Die oben genannten bekannten Verfahren sind jedoch fertigungstechnisch aufwändig.

Insbesondere bei elektrischen Großmaschinen wird der Ständer üblicherweise mit sogenannten Zweischichtwicklungen, in seltenen Fällen auch mit Einschichtwicklungen, ausgerüstet. Um dabei Spulen gleicher Breite realisieren zu können, wird handelsüblich, insbesondere bei Zweischichtwicklungen, die Breite der Zähne und Nuten derart realisiert, dass sich eine gleichmäßige Nutteilungsbreite über den Umfang des Ständers ergibt, wobei alle Zähne und Nuten eine einheitliche Breite aufweisen. Bei Einschichtwicklungen mit drei Etagen oder mit Faßspulen wird durch die Anordnung der Spulen einer Spulengruppe dagegen jeweils pro Spulengruppe eine sogenannte doppelte Polteilung realisiert, so dass sich pro Spulengruppe ein sogenanntes Polpaar ergibt. Nach jeder Spulengruppe befindet sich ein Bereich am Umfang des Ständers, in dem keine Spulen angeordnet sind. Diese Eigentümlichkeit der Anordnung kann genutzt werden, um die Nutteilbreite über dem Umfang des Ständers zu variieren, ohne dass dabei die Breite der Spulen unterschiedlich sein muss. Dies kann genutzt werden, um auftretende Rast- und Pendelmomente zu vermindern und die Form der Feldkurve (Wicklungsfaktor) zu verbessern.

DE 10 2008 032 314 A1 ist Stand der Technik.

Es ist Aufgabe der Erfindung, bei einer permanenterregten rotierenden elektrischen Maschine auftretende Rast- und/oder Pendelmomente zu verringern.

Diese Aufgabe wird erfindungsgemäß gelöst durch einen Ständer einer permanenterregten rotierenden elektrischen Maschine, wobei der Ständer mehrere in axialer Richtung des Ständers verlaufende Zähne und Nuten aufweist, wobei entlang dem Umfang des Ständers Spulengruppen angeordnet sind, wobei die Spulengruppen jeweilig mindestens drei Spulen aufweisen, die in Umfangsrichtung in direkt aufeinander folgend angeordneten Nuten angeordnet sind, wobei alle Nuten eine einheitliche Nutbreite NB aufweisen, wobei die Zähne, die nicht in der Mitte einer Spulengruppe und nicht zwischen zwei in Umfangsrichtung des Ständers direkt aufeinander folgend angeordneten Spulengruppen angeordnet sind eine einheitliche Zahnbreite ZB aufweisen, wobei in der Mitte einer ersten Spulengruppe ein erster Mittenzahn, der eine erste Mittenzahnbreite MB aufweist, angeordnet ist, wobei der Ständer eine zweite Spulengruppe aufweist, wobei die erste und die zweite Spulengruppe in Umfangsrichtung direkt aufeinander folgend angeordnet sind, wobei zwischen der ersten und der zweiten Spulengruppe ein erster Randzahn, der eine erste Randzahnbreite RB aufweist, angeordnet ist, wobei die erste Randzahnbereite RB im Wesentlichen

$$RB = a \cdot ZB$$

ist und die erste Mittenzahnbreite MB im Wesentlichen MB = (2-a) ·ZB ist,
wobei der Faktor a größer als 0 ist und maximal 0,35 ist.

Wenn der Faktor a größer als 0 ist und maximal 0,35 ist, werden die Rast- und/oder Pendelmomente besonders stark vermindert.

Vorteilhafte Ausbildungen der Erfindung ergeben sich aus den abhängigen Ansprüchen.

Weiterhin erweist es sich als vorteilhaft, wenn entsprechend wie für die erste Spulengruppe die Randzahnbreiten und die Mittenzahnbreiten bei den übrigen Spulengruppen ausgeführt sind, wobei der Faktor a bei allen Spulengruppen identisch ist oder der Faktor a bei mindestens zwei Spulengruppen unterschiedlich ist. Wenn der Faktor a bei allen Spulengruppen identisch ist, ergibt sich eine sehr symmetrische Gesamtanordnung und die Rast- und/oder Pendelmomente werden besonders stark vermindert. Wenn der Faktor a uneinheitlich ist, kann der Ständer besonders einfach gefertigt werden.

Die permanenterregte rotierende elektrische Maschine kann dabei z.B. als Generator oder Elektromotor ausgebildet sein, wobei der Generator insbesondere als Windkraftgenerator und insbesondere als direkt angetriebener (das Windrad ist direkt ohne zwischengeschaltetes Getriebe mit dem Windkraftgenerator verbunden) Windkraftgenerator ausgebildet sein kann.

Ein Ausführungsbeispiel der Erfindung ist in der Zeichnung dargestellt und wird im Folgenden näher erläutert. Dabei zeigen:

FIG 1 eine schematisierte Ansicht einer erfindungsgemäßen permanenterregten rotierenden elektrischen Maschine und

FIG 2 eine schematisierte Detailansicht eines Ausschnitts eines erfindungsgemäßen Ständers der Maschine.

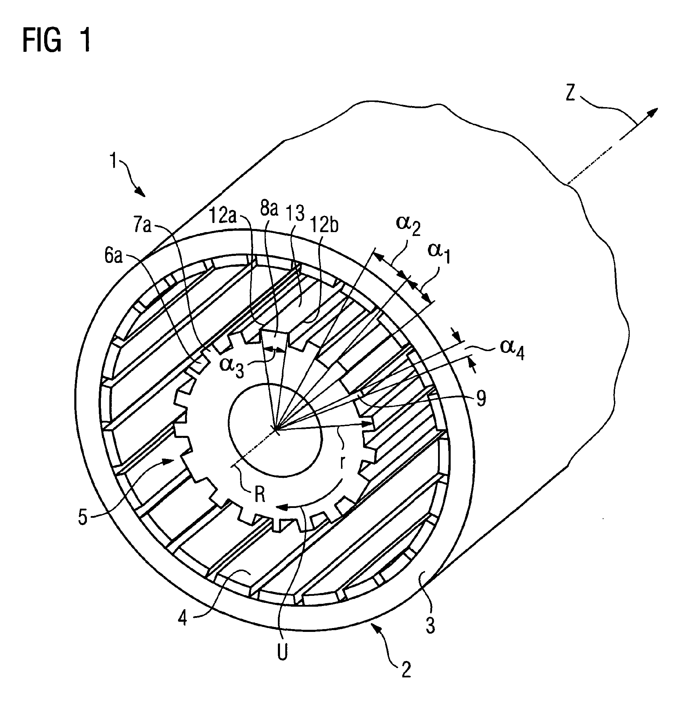

In FIG 1 ist in Form einer schematisierten perspektivischen Darstellung eine erfindungsgemäße permanenterregte rotierende elektrische Maschine 1 dargestellt. Die Maschine 1 ist dabei im Rahmen des Ausführungsbeispiels als Generator und insbesondere als Windkraftgenerator ausgebildet. Es sei dabei an dieser Stelle angemerkt, dass der Übersichtlichkeit halber in FIG 1 nur die zum Verständnis der Erfindung wesentlichen Elemente der Maschine 1 dargestellt sind.

Die Maschine 1 weist einen Rotor 2 auf, der rotierbar um eine Rotationsachse R der Maschine 1 angeordnet ist. Der Rotor 2 umfasst dabei alle um die Rotorachse R rotierbar angeordneten Elemente der Maschine 1. Der Rotor 2 weist ein Rotorjoch 3 auf, an dem Permanentmagnete angeordnet sind, wobei der Übersichtlichkeit halber in FIG 1 nur ein Permanentmagnet 4 mit einem Bezugszeichen versehen ist. Im Betrieb der Maschine 1 rotiert der Rotor 2 im Rahmen des Ausführungsbeispiels um einen in der Maschine 1 zentral angeordneten und gegenüber der Umgebung der Maschine 1 ruhend angeordneten Ständer 5. Da der Rotor 2 um den Ständer 5 herum angeordnet ist, wird eine solche Maschine fachspezifisch auch als Außenläufer bezeichnet. Da der Rotor 1 Permanentmagnete aufweist, welche permanent ein Magnetfeld zum Betrieb der Maschine 1 erzeugen, wird eine solche Maschine fachspezifisch auch als permanenterregte oder permanetmagneterregte Maschine bezeichnet. Da die Maschine 1 einen um eine Rotationsachse R im Betrieb der Maschine 1 rotierenden Rotor 2 aufweist, wird eine solche Maschine auch als rotierende elektrische Maschine bezeichnet.

Der Ständer 5 weist mehrere in axialer Richtung Z verlaufende Zähne und Nuten auf, wobei der Übersichtlichkeit halber in FIG 1 nur die Zähne 7a, 8a und 9 und die Nut 6a mit einem Bezugszeichen versehen sind. Der Ständer besteht dabei im Rahmen des Ausführungsbeispiels aus in axialer Richtung Z hintereinander angeordneten Blechen. Die einzelnen Bleche sind dabei in der Regel mit einer elektrischen Isolierschicht, wie z.B. einer Lackschicht, versehen.

Die Zähne und Nuten der Segmente entstehen durch eine entsprechende Ausbildung der Form der Bleche. In den Nuten um die Zähne herum verlaufen die elektrischen Spulen des Ständers, wobei die Spulen der Übersichtlichkeit halber und da für das Verständnis der Erfindung unwesentlich, nicht dargestellt sind.

Bei handelsüblichen permanenterregten rotierenden elektrischen Maschinen sind dabei die Breiten der einzelnen Zähne des Ständers 5 alle gleich. Erfindungsgemäß werden durch eine gezielte Vergrößerung und Verkleinerung der Breite bestimmter Zähne gegenüber den restlichen Zähnen des Ständers beim Betrieb der Maschine 1 auftretende Rast- und Pendelmomente verringert.

Es sei an dieser Stelle noch einmal angemerkt, dass es sich bei der FIG 1 um eine schematisierte Darstellung handelt, bei der z.B. insbesondere die Breite, Anzahl und Abmessungen der Zähne, Nuten und Permanentmagnete, sowie die Größe des zwischen Ständer und Rotor angeordneten Luftspalts nicht mit der Realität übereinstimmen.

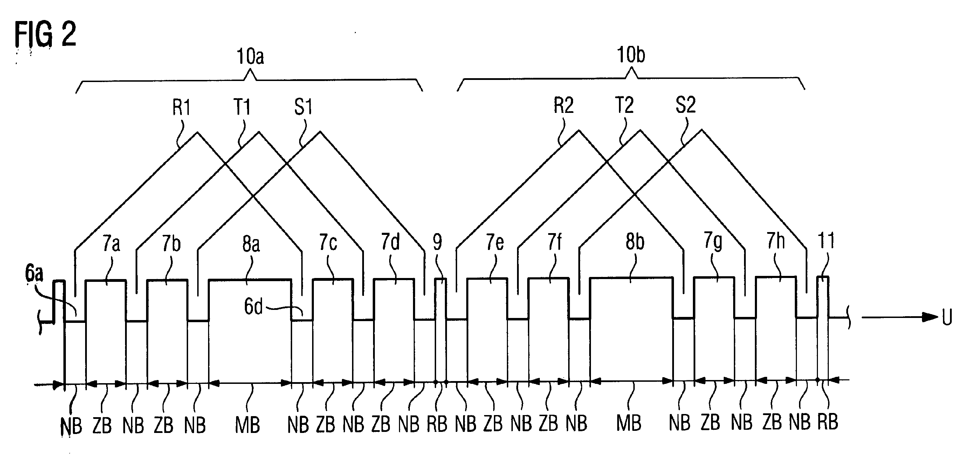

In FIG 2 ist in Form einer schematisierten Schnittansicht ein Ausschnitt des Ständers 5 dargestellt. Der Übersichtlichkeit halber ist der Ausschnitt des Ständers 5 dabei nicht wie in der Realität kreisbogenförmig, sondern auf einer Ebene aufgerollt, schematisiert dargestellt.

Entlang dem Umfang des Ständers 5 sind Spulengruppen angeordnet, wobei die Spulengruppe jeweils mindestens drei Spulen aufweisen. In FIG 2 ist dabei eine erste Spulengruppen 10a, die aus den drei Spulen R1, T1 und S1 besteht, und eine zweite Spulengruppe 10b, die aus den drei Spulen R2, T2 und S2 besteht, dargestellt. Die Spulen sind dabei nur symbolhaft dargestellt. Die zweite Spulengruppe 10b ist in Umfangsrichtung U des Ständers direkt nach der ersten Spulengruppe 10a angeordnet. Der Übersichtlichkeit halber sind in der FIG 2 nur die Nuten 6a und 6d mit einem Bezugszeichen versehen, wobei alle Nuten des Ständers die gleiche Nutbreite NB, d.h. eine einheitliche Nutbreite NB aufweisen.

Die erste Spulengruppe 10a weist im Rahmen des Ausführungsbeispiels, wie schon gesagt, die Spulen R1, T1 und S1 und die zweite Spulengruppe 10b die Spulen R2, T2 und S2 auf. Die Spule R1 verläuft dabei, wie durch das Symbol der Spule R1 angedeutet, in den Nuten 6a und 6d und umschließt somit die Zähne 7a, 7b und 8a. Entsprechend verlaufen die übrigen Spulen in den, den jeweiligen Spulen zugehörigen Nuten, wie von den Symbolen der Spulen dargestellt. Durch die Spulen R1 und R2 fließt der Phasenstrom R, durch die Spulen T1 und T2 fließt der Phasenstrom T und durch die Spulen S1 und S2 der Phasenstrom S. Die Spulengruppen sind dabei entlang dem Umfang des Ständers angeordnet. Wie bereits erläutert, weisen im Rahmen des Ausführungsbeispiels, die Spulengruppen dabei jeweils drei Spulen auf. Dies muss nicht notwendigerweise so sein, sondern eine Spulengruppe kann auch mehr wie drei Spulen aufweisen. So können z.B. die Spulengruppen auch jeweilig sechs Spulen aufweisen, wobei in diesem Fall dann durch die ersten zwei direkt aufeinander in Umfangsrichtung U folgenden Spulen der Phasenstrom R fließt durch die nächsten zwei direkt in Umfangsrichtung U aufeinander folgenden Spulen der Phasenstrom T fließt und durch die nächsten zwei in Umfangsrichtung U direkt aufeinander folgenden Spulen der Phasenstrom S fließt, so dass insgesamt wieder ein dreiphasiges Drehstromsystem entsteht.

Der ersten Spulengruppe 10a sind die Zähne 7a, 7b, 8a, 7c, 7d und der Zahn 9 zugeordnet. Der zweiten Spulengruppe 10b sind die Zähne 7e, 7f, 8b, 7g, 7b und 11 zugeordnet. Die Zähne, die in der Mitte der Spulengruppen angeordnet sind, werden nachfolgend als Mittenzähne bezeichnet und die Zähne, welche zwischen zwei direkt in Umfangsrichtung U aufeinander folgenden Spulengruppen angeordnet sind, werden nachfolgend als Randzähne bezeichnet. Der erste Mittenzahn 8a ist in der Mitte der ersten Spulengruppe 10a angeordnet und der zweite Mittenzahn 8b ist in der Mitte der zweiten Spulengruppe 10b angeordnet. Der erste Randzahn 9 ist zwischen der ersten Spulengruppe 10a und der zweiten Spulengruppe 10b angeordnet. In Umfangsrichtung U des Ständers ist nach der ersten Spulengruppe 10a direkt aufeinanderfolgend die zweite Spulengruppe 10b angeordnet.

Der zweite Randzahn 11 ist zwischen der zweiten Spulengruppe 10b und einer in FIG 2 nicht mehr dargestellten dritten Spulengruppe angeordnet. Die Zähne, die nicht in der Mitte einer Spulengruppe und nicht zwischen zwei in Umfangsrichtung des Ständers direkt aufeinander folgend angeordneten Spulengruppen angeordnet sind, weisen alle die gleiche Zahnbreite ZB, d.h. eine einheitliche Zahnbreite ZB auf. Im Rahmen des Ausführungsbeispiels sind dies die Zähne 7a, 7b, 7c, 7d, 7e, 7f, 7g und 7h. Die Zähne 7a, 7b, 7c, 7d, 7e, 7f, 7g und 7h weisen eine einheitliche Zahnbreite ZB auf. Wie bereits erläutert, weisen alle Nuten die gleiche Nutbreite NB auf, d.h. eine einheitliche Nutbreite NB auf. Der erste Mittenzahn 8a weist eine erste Mittenzahnbreite MB auf und der erste Randzahn 9 eine erste Randzahnbreite RB.

Im Rahmen des Ausführungsbeispiels weist dabei der jeweilige Mittenzahn bei allen Spulengruppen die gleiche Mittenzahnbreite MB, d.h. eine einheitliche Mittenzahnbreite MB auf. Weiterhin weisen alle Randzähne die gleiche Randzahnbreite RB, d.h. eine einheitliche Randzahnbreite RB auf.

Bei einem handelsüblichen Ständer einer permanenterregten rotierenden elektrischen Maschine weisen alle Zähne und alle Nuten eine einheitliche Breite auf. Das heißt, die so genannte Nutteilungsbreite NTB, die die Summe der Breite eines Zahns und der Breite der den Zahn direkt nachfolgenden Nut ist, ergibt bei einem handelsüblichen Ständer zu:

$$NTB = \frac{U}{N} = \frac{2 \cdot \pi \cdot r}{N} \qquad (1)$$

wobei N die Anzahl der Nuten, U der Umfang des Ständers und r der Radius des Ständers ist.

Erfindungsgemäß wird zur Verringerung der Rast- und/oder Pendelmomente die Nutteilungsbreite verändert, indem die Breite des Zahns, der zwischen zwei in Umfangsrichtung direkt aufeinander folgend angeordneten Spulengruppen angeordnet ist, um einen Faktor a verkleinert wird und entsprechend dem Faktor a die Breite des Zahns, der in der Mitte der Spulengruppe angeordnet ist zu dem der Randzahn zugeordnet ist, vergrößert wird. Die erste Randzahnbreite RB des ersten Randzahns 9 wird somit gegenüber der Zahnbreite ZB verkleinert und entsprechend der Verkleinerung wird die erste Mittenzahnbreite MB des ersten Mittenzahns 8a vergrößert. Für die erste Randzahnbreite RB gilt somit:

$$RB = a \cdot ZB \qquad (2)$$

und für die erste Mittenzahnbreite MB gilt:

$$MB = (2-a) \cdot ZB \qquad (3)$$

wobei der Faktor a größer als 0 und maximal 0,35 ist. Die Zahnbreite ZB entspricht dabei der Länge des Kreisbogens über dem Winkel $\alpha_1$, die Nutbreite NB entspricht der Länge des Kreisbogens über dem Winkel $\alpha_2$, die erste Mittenzahnbreite MB entspricht der Länge des Kreisbogens über dem Winkel $\alpha_3$ und die erste Randzahnbreite RB entspricht der Länge des Kreisbogens über dem Winkel $\alpha_4$ (siehe FIG 1),

Es gilt somit:

$$ZB = \frac{2 \cdot \pi \cdot r \cdot \alpha_1}{360^0} \qquad (4)$$

$$NB = \frac{2 \cdot \pi \cdot r \cdot \alpha_2}{360^0} \qquad (5)$$

$$MB = \frac{2 \cdot \pi \cdot r \cdot \alpha_3}{360^0} \qquad (6)$$

$$RB = \frac{2 \cdot \pi \cdot r \cdot \alpha_4}{360^0} \qquad (6)$$

wobei r der Radius des Ständers ist. Der Radius r des Ständers geht dabei von der Rotationsachse R bis zur der dem Rotor 2 zugewanden Seite der Zähne (siehe FIG 1). Der jeweilige Winkel ist der Winkel, der von den in axialer Richtung Z verlaufenden Kanten der dem Rotor 2 zugewanden Seite der jeweilig zugehörigen Zähne, ausgehend von der Rotationsachse R, aufgespannt wird (siehe FIG 1). Die dem Rotor 2 zugewande Seite des ersten Mittenzahns 8a ist in FIG 1 mit dem Bezugszeichen 13 versehen und die in axialer Richtung Z verlaufenden Kanten der dem Rotor 2 zugewanden Seite 11 des ersten Mittenzahns 8a sind in FIG 1 mit den Bezugszeichen 12a und 12b versehen.

Durch die erfindungsgemäße Verkleinerung der Breite des Randzahns und entsprechende Vergrößerung der Breite des Mittenzahns wird die Breite der Spulen nicht geändert. Der Abstand zwischen den Spulen innerhalb einer Spulengruppe ist ebenfalls gleich. Es ergibt sich somit weiterhin wie beim handelsüblichen Ständer ein symmetrisches dreiphasiges Drehstromsystem.

Die Nutbreite NB wird dabei so gewählt, dass die Spulen in die Nuten passen.

Im Rahmen des Ausführungsbeispiels sind dabei, entsprechend wie für die erste Spulengruppe 10a, die Randzahnbreiten und die Mittenzahnbreiten bei den übrigen Spulengruppen ausgeführt, wobei der Faktor a bei allen Spulengruppen identisch ist. Die Mittenzahnbreite des zweiten Mittenzahns 8b ist somit genauso groß wie die Mittenzahnbreite des ersten Mittenzahns 8a und die Randzahnbreite des zweiten Randzahns 11 ist somit genauso groß wie die Randzahnbreite des ersten Randzahns 9.

Alternativ hierzu kann der Wert des Faktors a aber auch bei den Spulengruppen unterschiedlich sein. So kann z.B. der Faktor a bei der ersten Spulengruppe 10a 0,1 betragen und bei der zweiten Spulengruppe 10b 0,2, so dass sich für die Breiten der Mittenzähne 8a und 8b und die Breiten der Randzähne 9 und 11 unterschiedliche Werte ergeben.

**Patentansprüche**

1. Ständer einer permanenterregten rotierenden elektrischen Maschine (1), wobei der Ständer (5) mehrere in axialer Richtung (Z) des Ständers (5) verlaufende Zähne (7a,8a, 9) und Nuten (6a, 6d) aufweist, wobei entlang dem Umfang des Ständers (5) Spulengruppen (10a,10b) angeordnet sind, wobei alle Nuten eine einheitliche Nutbreite NB aufweisen,
**dadurch gekennzeichnet,**
**dass** die Spulengruppen (10a,10b) jeweils mindestens drei Spulen (R1,T1,S1) aufweisen, die in Umfangsrichtung (U) in direkt aufeinander folgend angeordneten Nuten angeordnet sind, wobei die Zähne, die nicht in der Mitte einer Spulengruppe (10a,10b) und nicht zwischen zwei in Umfangsrichtung (U) des Ständers (5) direkt aufeinander folgend angeordneten Spulengruppen (10a,10b) angeordnet sind eine einheitliche Zahnbreite ZB aufweisen, wobei in der Mitte einer ersten Spulengruppe (10a) ein erster Mittenzahn (8a), der eine erste Mittenzahnbreite MB aufweist, angeordnet ist, wobei der Ständer (5) eine zweite Spulengruppe (10b) aufweist, wobei die erste und die zweite Spulengruppe in Umfangsrichtung (U) direkt aufeinander folgend angeordnet sind, wobei zwischen der ersten und der zweiten Spulengruppe ein erster Randzahn (9), der eine erste Randzahnbreite RB aufweist, angeordnet ist, wobei die erste Randzahnbereite RB im Wesentlichen

$$RB = a \cdot ZB$$

ist und die erste Mittenzahnbreite MB im Wesentlichen

$$MB = (2 - a) \cdot ZB$$

ist,
wobei der Faktor a größer als 0 ist und maximal 0,35 ist.

2. Ständer **nach Anspruch 1,**
**dadurch gekennzeichnet, dass** entsprechend wie für die erste Spulengruppe (10a) die Randzahnbreiten und die Mittenzahnbreiten bei den übrigen Spulengruppen ausgeführt sind, wobei der Faktor a bei allen Spulengruppen identisch ist oder der Faktor a bei mindestens zwei Spulengruppen unterschiedlich ist.

3. Permanenterregte rotierende elektrische Maschine, wobei die Maschine als Generator oder Elektromotor ausgebildet ist und einen Ständer nach einem der vorhergehenden Ansprüche aufweist.

4. Permanenterregte rotierende elektrische Maschine nach Anspruch **3, dadurch gekennzeichnet, dass** der Generator als Windkraftgenerator ausgebildet ist.

**Claims**

1. Stator of a permanently excited rotating electric machine (1), wherein the stator (5) comprises several teeth (7a, 8a, 9) and grooves (6a, 6d) extending in the axial direction (Z) of the stator (5), wherein coil groups (10a, 10b) are disposed along the circumference of the stator (5), wherein all grooves have a uniform groove width NB,
**characterised in that**
the coil groups (10a, 10b) each comprise at least three coils (R1, T1, S1) which are disposed in grooves disposed so that the directly follow one another in the circumferential direction (U), wherein the teeth, which are not disposed in the centre of a coil group (10a, 10b) and not between two coil groups (10a, 10b) disposed so that they directly follow one another in the circumferential direction (U) of the stator (5) have a uniform tooth width ZB, wherein a first central tooth (8a) which has a first central tooth width MB, is disposed in the centre of a first coil group (10a), wherein the stator (5) has a second coil group (10b) wherein the first and the second coil groups are disposed so that they directly follow one another in the circumferential direction (U), wherein a first boundary tooth (9), which has a first boundary tooth width RB, is disposed between the first and the second coil group, wherein the first boundary tooth width RB is essentially

$$RB = a \cdot ZB$$

and the first central tooth width MB is essentially

$$MB = (2-a) \cdot ZB,$$

wherein the factor a is greater than 0 and a maximum of 0.35.

**2.** Stator according to claim 1,
**characterised in that**
the boundary tooth widths and the central tooth widths are embodied in the remaining coil groups similarly to the first coil group (10a), wherein factor a is identical in all coil groups or factor a is different in at least two coil groups.

**3.** Permanently excited rotating electric machine, wherein the machine is embodied as a generator or electric motor and comprises a stator according to one of the preceding claims.

**4.** Permanently excited rotating electric machine according to claim 3, **characterised in that** the generator is embodied as a wind power generator.


**Revendications**

**1.** Stator d'une machine (1) électrique tournante à excitation permanente, dans lequel le stator ( 5 ) a plusieurs dents ( 7a, 8a, 9 ) et encoches ( 6a, 6d ) s'étendant dans la direction ( Z ) axiale du stator ( 5 ), des groupes ( 10a, 10b) de bobines étant disposés sur le pourtour du stator ( 5 ), toutes les encoches ayant une largeur NB unitaire,
**caractérisé**
**en ce que** les groupes ( 10a, 10b) de bobines ont respectivement au moins trois bobines ( R1, T1, S1 ), qui sont disposées dans la direction (U) périphérique dans des encoches disposées en se suivant directement l'une l'autre, les dents qui ne sont pas disposées au milieu d'un groupe ( 10a, 10b) de bobines et qui ne sont pas disposées entre deux groupes ( 10a, 10b) de bobines disposés en se suivant l'un l'autre directement dans la direction ( U ) périphérique du stator ( 5 ) ayant une largeur ZB de dent unitaire, dans lequel, au milieu d'un premier groupe ( 10a ) de bobines, est disposée une première dent ( 8a ) médiane qui a une première largeur MB de dent médiane, le stator ( 5 ) ayant un deuxième groupe ( 10b) de bobines, le premier et le deuxième groupes de bobines étant disposés en se suivant directement l'un l'autre dans la direction ( U ) périphérique, une première dent ( 9 ) de bord qui a une première largeur RB de dent de bord étant disposée entre le premier et le deuxième groupes de bobines, la première largeur RB de dent de bord étant sensiblement

$$RB = a \bullet ZB$$

et la première largeur MB de dent médiane étant essentiellement

$$MB = ( 2 - a ) \bullet ZB,$$

le facteur a étant plus grand que 0 et étant au maximum égal à 0,35.

**2.** Stator suivant la revendication 1,
**caractérisé en ce que** les largeurs de dents de bord et les largeurs de dents médianes sont réalisées pour les autres groupes de bobines comme pour le premier groupe ( 10a ) de bobines, le facteur a étant identique dans tous les groupes de bobines ou le facteur a étant différent dans au moins deux groupes de bobines.

**3.** Machine électrique tournante à excitation permanente, la machine étant constituée en génératrice ou en moteur électrique et ayant un stator suivant l'une de revendications précédentes.

**4.** Machine électrique tournante à excitation permanente suivant la revendication 3, **caractérisée en ce que** la génératrice est constituée en génératrice d'éolienne.

FIG 1

# FIG 2

EP 2 532 074 B1

**EP 2 532 074 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008032314 A1